# EUROPEAN PATENT SPECIFICATION

(11) **EP 2 881 343 B1**
(45) Date of publication and mention of the grant of the patent: **22.03.2017**
(21) Application number: 14196394.2
(22) Date of filing: 04.12.2014
(51) Int. Cl.: B23Q 3/08, B23Q 7/03, B65G 21/20, B65G 17/32

(54) **Conveyor for workpieces in a machine tool and machine tool with such conveyor**
Werkstückförderer in einer Werkzeugmaschine und Werkzeugmaschine mit einem solchen Förderer
Convoyeur pour pièces dans une machine-outil et machine-outil avec un tel convoyeur

(30) Priority: 05.12.2013 IT PC20130026
(43) Date of publication of application: 10.06.2015
(73) Proprietor: FULMEC di Fulcini Fulvio, 29020 Vigolzone (PC) (IT)
(72) Inventor: Fulcini, Fulvio, 29020 VIGOLZONE (PC) (IT)
(74) Representative: Fisauli, Beatrice A. M.

(56) References cited:
- WO-A2-02/060788
- NL-C- 2 004 492

## Description

The present invention relates to a device for blocking and moving a workpiece in a machine tool, such as panels or the like, or also workpieces with curved surfaces.

The invention also relates to a machine tool provided with this blocking and moving device.

To machine flat elements, such as panels made of wood, plastic materials or composite materials, different types of machine tools exist, each with its own distinctive characteristics and related advantages and disadvantages.

In pantograph machines the panel is generally blocked on a work surface and a machining head is movable in the work area to enable the tools to perform all the machining operations required. This type of machine tool ensures high flexibility, as practically any machining operation can be performed on all sides of the panel and on at least the upper face, maintaining it in the same position. However, these machines are characterized by low productivity, as they can only machine one panel at a time. Moreover, the panel is generally loaded and unloaded manually by an operator. All this contributes to make machining times relatively long.

Instead, other machine tools, such as saws and squaring machines, move the panel along a machining path during which it undergoes given machining operations by means of substantially fixed or almost fixed tools. In general the panels are loaded continuously by an automated system that enables high productivity and efficiency to be obtained.

However, unlike pantographs, these machines are much less flexible and are generally used to create production lines dedicated to a single product with given machining operations.

In fact, during a product change, the machine must necessarily be halted and equipped again in order to machine the new product.

To perform all the machining operations required to obtain a finished panel, these machines are therefore placed in series with one another so that the panel is moved continuously between them.

Although efficient, these production lines have very high costs and require a relatively large dedicated space.

Therefore, in the sector there is the need to produce a machine tool that can combine the advantages of the two solutions described above, i.e. characterized both by a good level of flexibility combined with greater productivity with respect to that of a pantograph machine.

Therefore, the applicant has identified the need to provide a device for blocking and moving the workpiece that enables it to be moved from a loading station toward an unloading station, and also to be constrained stably and precisely during the machining operations, while leaving the greatest possible surface area free to substantially perform all the machining operations required to obtain a finished product.

NL 2004492 C describes a conveyor for light packages, which comprises an endless conveyor chain formed by a series of linked conveyor elements. A vacuum system, positioned under the conveyor chain, retains the products on the upper surface of the conveyor elements. Holes pass through the body of the conveyor elements to enable the vacuum system to generate suction in the region beside the holes. This document discloses a device according to the preamble of claim 1.

This known conveyor has some limits. In fact, the conveyor is designed always to operate with losses of load. In fact, the holes of the conveyor elements not covered by a product continue to draw air from the outside, thereby reducing the blocking force of the products.

Moreover, the lower surface of the conveyor elements is formed so as to create a continuous central channel, in communication with all the suction holes.

This conveyor is therefore only suitable to weakly block light products that are not subjected to external forces.

EP 1394079 A1 describes a conveying device, for conveying workpieces to be machined, comprising a conveyor belt with through suction openings that flow out at same number of suction cups to retain the workpieces, a device to guide and house the conveyor belt with a contact surface on which the belt runs, a longitudinal channel, connected to vacuum generating means, which faces said contact surface to generate a negative pressure in the suction openings of the belt.

However, this prior art device is only suitable to convey a workpiece in a machine tool, but not to block it during performance of the various machining operations.

This is because the conveyor belt, to which the suction cups that block the workpiece are constrained, is by nature a flexible element that, under the action of the shearing forces of the tools, would become deformed, causing movements of the workpiece that are undoubtedly incompatible with the machining tolerances required for these products.

EP 2551219 A1 describes a system for conveying a workpiece in a machine tool, comprising an endless circulating element in the form of a chain, for conveying workpieces. The circulating element is guided by means of guide elements on a first inner side thereof, while a vacuum system pulls a workpiece against a second side of the circulating element. Openings, in connection with the vacuum system, are in communication with a channel produced in the circulating element to retain the workpiece by means of negative pressure.

In this conveying device, the circulating element (chain) is maintained in position by magnetic bands on which there slide rollers or the like that enable sliding on the guide elements. As in the previous case, this system does not ensure perfect positioning of the workpiece in the machine tool, and maintenance thereof during the machining operation by the tools.

Moreover, in this device the system for generating the vacuum must be oversized, as the various elements of which the circulating element is composed do not continuously cover the surface on which they slide so that at times, during movement of the circulating element, the openings through which the negative pressure is generated are not covered and draw in air freely.

Further, for the same reason, a large amount of machining residues can be drawn through said openings and can damage or clog the vacuum generating devices.

Said residues can also infiltrate under the support surface of the circulating element, increasing wear and further reducing the vacuum force that retains the workpiece.

DE 19847249 A1 describes a circumferential conveyor chain for a machine for continuous machining of workpieces comprising vacuum clamping elements, a vacuum channel open on one longitudinal side thereof, where the open longitudinal side is provided with that define sealing surfaces in which a sealing belt moves in synchronism with the vacuum clamping elements. The sealing belt is provided with a plurality of apertures having the same spacing as the vacuum clamping elements so that vacuum connection elements can connect the longitudinal channel with the vacuum clamping elements when the belt is at the open side.

The aforesaid prior art conveyor device also has some limitations. The seal of the vacuum is in fact produced by means of the belt, which is maintained pressed on the sealing surface of the channel to prevent losses of load.

In the case in which the workpiece conveying section is of substantial length (for example 5-10 meters or more), the belt will be subject to elongation over time, compromising its operation and in particular correct adhesion to the surface of the vacuum channel.

Moreover, said belt is subject to gradual wear due to friction, which can cause breakage of the same belt, which requires to be replaced immediately, with considerable machine downtime.

A further disadvantage of the device consists in the larger footprint required to position the vacuum channel outside the conveyor chain, channel which in some cases limits the movement of the tools that machine the edge of the workpiece.

In this context the object of the present invention is to create a device for blocking and moving a workpiece in a machine tool, which overcomes the problems of the prior art mentioned above.

In particular, an object of the present invention is to create a device that enables the workpiece to be constrained on a blocking surface of limited dimensions so as to be able to perform the greatest number of machining operations required to obtain the finished product (with the required tolerances). At the same time, the device according to the invention would permit a workpiece to translate inside the machine, for example between a loading station and an unloading station, passing through one or more machining stations.

More in detail, an object of the present invention is to provide a device for blocking and moving a workpiece in a machine tool that enables the workpiece to be maintained immobile, so as to comply with limited dimensional tolerances, even when the workpiece is subjected to high forces, such as those typically transmitted by the tools during machining operations,.

Another object of the present invention is to produce a device for blocking and moving a workpiece in a machine tool that is efficient from the viewpoint of energy consumption.

A further object of the present invention is to produce a device for blocking and moving a workpiece in a machine tool that is reliable and does not require frequent maintenance operations.

An object of the present invention is also to provide a machine tool for machining panels or the like that is flexible, i.e. that enables a large number of machining operations to be performed on the workpiece, and at the same time has good production capacity.

One more object of the present invention is to produce a machine tool for machining panels or the like of small dimensions and with a limited cost.

The aforesaid objects are achieved by the device for blocking and moving a workpiece in a machine tool comprising:
- a conveyor chain, which includes a plurality of shoes connected to one another, wherein at least one of said shoes is provided with at least one suction channel that passes through the body of the shoe and flows out from a lower face;
- a support that defines a circulation path for said conveyor chain;
- a vacuum channel with a sliding surface, on which said shoes slide;
- vacuum pick-up means in communication with said vacuum channel by means of said suction channel;
wherein on said sliding surface there being produced at least one opening to place said vacuum channel in communication with the suction channel, and wherein said shoes being provided with sealing means adapted to prevent suction of air between two adjacent shoes.

According to the invention, the sealing means comprise a first contact surface with at least one curved section on a first side and a second contact surface with a curved section on a second side, the curved sections of two adjacent shoes being one convex and the other concave so as to mutually adhere when the shoes are set next to each other.

According to the invention, said curved sections lie on a circumference tangent to the lower surface of the shoes, said lower surface resting on the sliding surface when the shoes slide on it.

Said contact surfaces that, when two shoes are set next to each other are in contact with one another, ensure the tightness of the vacuum.

Advantageously, the curved sections of the first contact surface and of the second contact surface extend in such a way that the lower faces of said shoes create a flat and substantially endless lower surface when the conveyor chain is resting on the sliding surface.

This device thus configured makes it possible to prevent losses of load between the apparatus to generate the vacuum and the vacuum pick-up means. Consequently, this makes it possible to maximize the pick-up force on the workpiece to be machined. Moreover, the apparatus for generating the vacuum can have a lower suction power, with a consequent reduction in energy consumption.

In another aspect of the invention, said lower surface of the chain preferably has an extension in width such as to fully cover at least the opening or openings produced in the vacuum channel.

In practice, the lower surface of the chain, formed by the lower faces of the shoes set next to each other, do not have openings or passages in communication with the vacuum channel, through which the vacuum apparatus can draw in air from outside.

In the separating areas between two adjacent shoes, suction from the outside is prevented by the contact surfaces, which continue to mutually adhere.

Therefore, the negative pressure is transmitted by the vacuum apparatus only to the vacuum pick-up means, trough the suction channels.

In another aspect of the invention, the curved sections of the contact surfaces comprise a circular arc. Preferably, the curved sections of the first contact surface and of the second contact surface share the same center and have the same radius. This permits adjacent shoes to rotate in relation to one another along the circulation path.

In another aspect of the invention, the arc of contact between the curved sections of the first and of the second contact surface has ah angle comprised between 5° and 180°. More preferably, said arc of contact has an angle comprised between 30° and 170°.

In another aspect of the invention, at least one convex curved section of the first or of the second contact surface has a profile tangent to the. lower surface of the shoe.

In another aspect of the invention, at the lower surface of the conveyor belt, a separating section is provided between two adjacent shoes. This separating section permits the shoes to rotate in relation to one another along the circulation path.

According to a variant of the invention, the shoes have a contact surface with a convex curved section on the first side and a contact surface with a concave curved section on the second side.

In another aspect of the invention, on the first side the shoes are provided with at least one projecting portion and on the second side are provided with at least one seat comprised between lateral flanges and a bottom wall. The first contact surface and the second contact surface are produced respectively on said projecting portion and on the bottom wall of the seat.

Preferably, a sealing gasket is interposed between the projecting portion and the lateral flanges. These sealing gaskets make it possible to prevent the passage of air from outside toward the vacuum channel. More in detail, the sealing gaskets prevent the passage of air in the separating section between two adjacent shoes. For this purpose, each sealing gasket extends up to the lower surface of the shoes.

In an aspect of the invention, at least one curved section of one of the contact surfaces can be produced on an insert, separated and made integral with the shoe.

Said insert is preferably, but not necessarily, made of a different material with respect to the material of the shoe. The insert can, for example, be made of a plastic material.

According to another aspect of the invention, a layer made of flexible material can also be interposed between the contact surfaces, said layer adhering to said surfaces also to ensure the tightness between adjacent shoes.

According to another aspect of the invention, the upper face of the vacuum channel is covered with a layer made of plastic material to improve the tightness of the vacuum and sliding between the lower face of the shoes and the sliding surface.

In yet another aspect of the invention, said vacuum channel is mounted sliding crosswise with respect to the support at least in one direction and is subject to the action of elastic means that maintain it pressed, with a certain degree of preload, against the lower faces of the shoes.

In another aspect of the invention, the shoes comprise at least one pair of guide wheels adapted to rotate resting on the lower guides, integral with the support.

In yet another aspect of the invention, the shoes preferably comprise at least one pair of preload wheels, projecting laterally from the body of the shoe, adapted to rotate resting on a pair of upper abutments connected movably to the support.

Further characteristics and advantages of the present invention will be more apparent from the indicative, and therefore non-limiting, description of a preferred but not exclusive example of a device for blocking and moving a workpiece in a machine tool, as shown in the accompanying drawings, wherein:

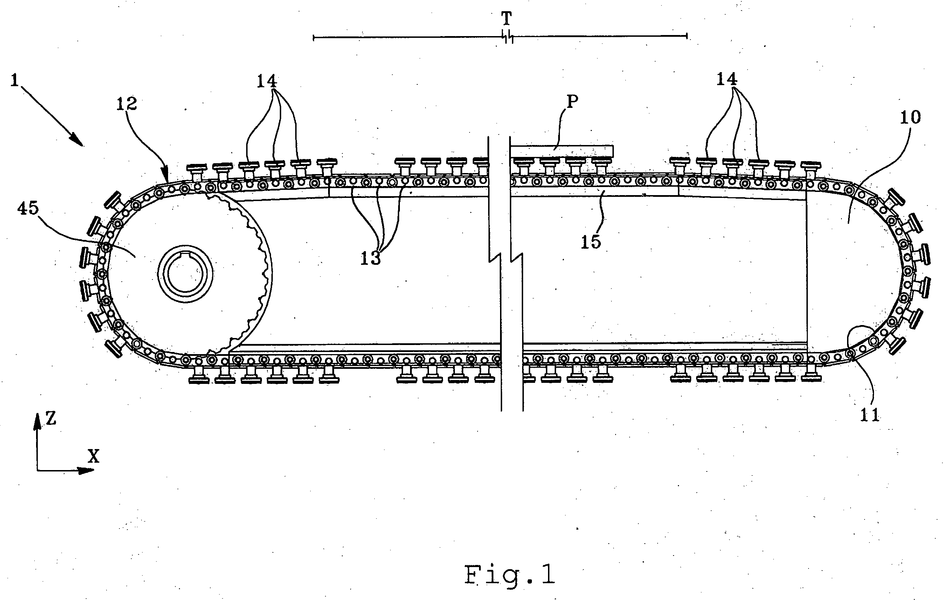

- Fig. 1 is a side view of a device for blocking and moving a workpiece in a machine tool according to the invention;
- Fig. 2 is a sectional side view of a portion of the device according to a first variant of the invention;
- Fig. 3 is a perspective view of a portion of the device according to a first variant of the invention;
- Fig. 4 is a perspective view of a shoe according to a first variant of the invention;
- Fig. 5 is a sectional side view of a portion of the device according to another variant of the invention;
- Fig. 6 is a perspective view of a portion of the device according to another variant of the invention;
- Fig. 7 is a perspective view of a shoe according to another variant of the invention;
- Fig. 8 is a bottom plan view of a portion of the conveyor chain according to the invention;
- Fig. 9 is a cross sectional view of the device of Fig. 1;

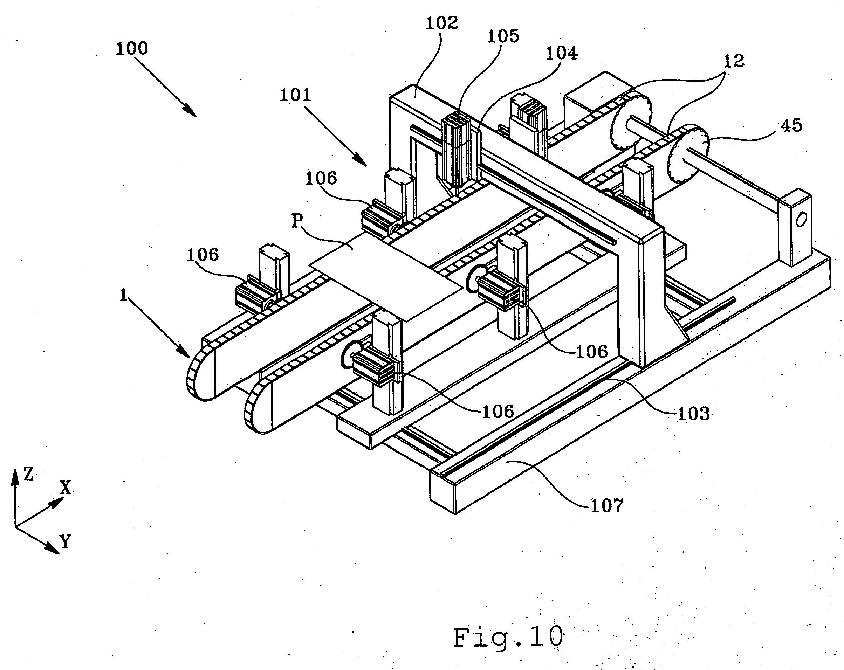

- Fig. 10 is a perspective view of a machine tool provided with the device for blocking and moving a workpiece according to the invention.

With reference to the accompanying figures, the number 1 indicates as a whole a device for blocking and conveying a workpiece in a machine tool according to the present invention.

The device comprises at least one support 10 that defines a circulation path 11, along which a conveyor chain, indicated as a whole with 12, is moved. Said circulation path 11 is typically a closed path, for example oval in shape.

According to the invention, this circulation path 11 comprises at least one active section T, substantially rectilinear, along which a workpiece P to be machined can be gripped and/or moved along a direction X in a machining area of a machine tool.

Said active section T can extend, for example, between a loading station of a rough workpiece and an unloading station of a machined workpiece of a machine tool.

As the machining operations can be performed both with the workpiece in movement and with the workpiece stationary, the device is also designed to block and maintain the workpiece in a given position, so as to enable the performance of precision machining operations, in which only the tool is moved, such as drilling or some types of milling operations.

According to the invention, the conveyor chain 12 comprises a plurality of shoes 13. The shoes 13 are connected to one another in an articulated manner to enable the chain to follow curved sections of the circulation path 11. For this purpose, the shoes 13 are typically pivoted or hinged to one another, as will be better explained below.

The shoes 13 are preferably made of metal so as to ensure limited deformation under the forces generated by the tools of the machine. Alternatively, the shoes can be made of plastic or composite materials.

Blocking of the workpiece P, typically a panel or the like, is implemented by means of vacuum pick-up means 14 (for practical reasons hereinafter referred to merely as pick-up means 14) applied to at least one of the shoes 13.

A negative pressure supplied to said pick-up means 14 enables the workpiece to be secured and prevents the movement thereof with respect to the conveyor chain 12.

This negative pressure is generated, for example, by a vacuum pump or similar apparatus, not shown in the figure. The vacuum pump is placed in communication with said pick-up means 14, at least in a part of the active section T of the circulation path, by means of a vacuum channel 15.

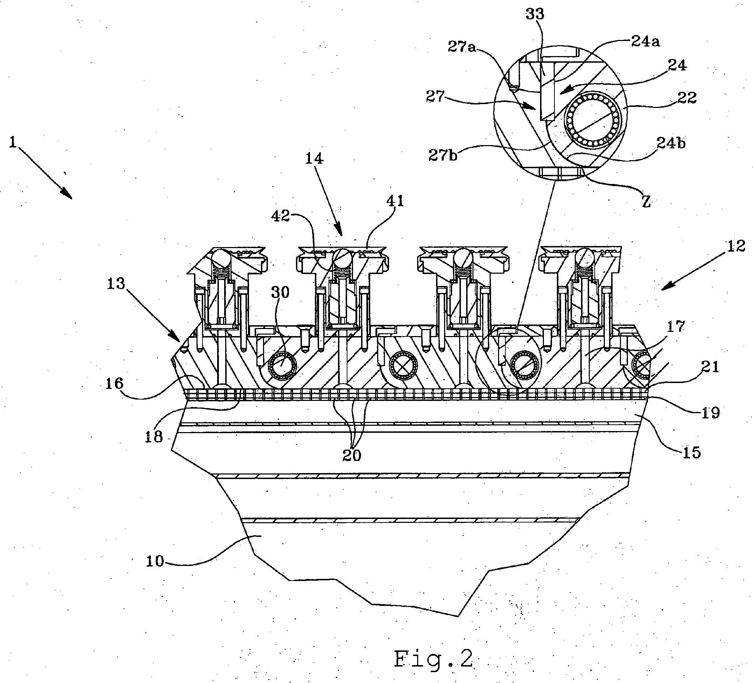

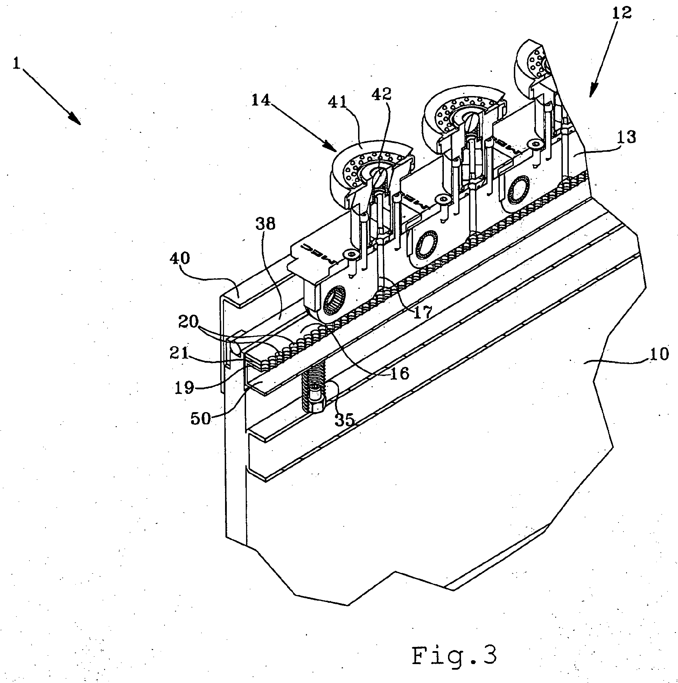

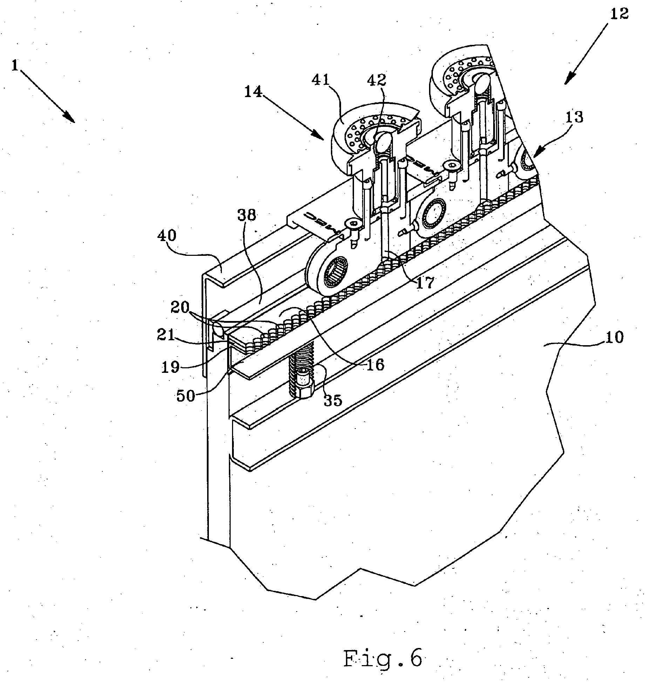

More in detail, as can be seen in Figs. 2, 3, 5 and 6, said vacuum channel 15 is arranged under the conveyor chain 12 and is provided, in the upper part, with a flat sliding surface 16 on which the shoes 13 move, resting thereagainst.

According to the invention, the negative pressure is transmitted to the pick-up means 14 through a suction channel 17 that passes through the body of the shoe 13 and flows out from a lower face 18.

One or more openings 20 produced on the upper face 19 place the vacuum channel 15 in communication with said suction channel 17 and therefore with the vacuum pick-up means 14.

The openings 20 can, for example, have a circular or elongated shape that extends longitudinally for a part or for the whole of the length of the active section T.

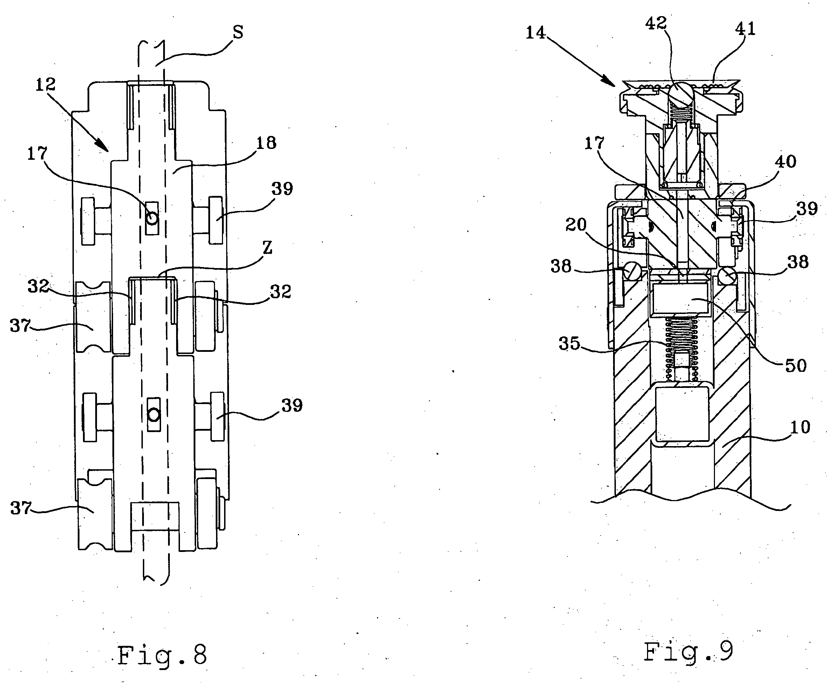

According to the invention, the conveyor chain 12 is configured so that, when the shoes 13 are aligned on a surface, the related lower faces 18 create a flat and substantially endless surface S. The extension in width of this surface S is preferably sufficient to cover at least the area of the openings 20 produced on the sliding surface 16 (Fig. 8).

Contact between said lower surface S of the conveyor chain 12 and the sliding surface 16 means that the openings 20 of the vacuum channel 15 are placed in fluid communication only with the suction channels 17. In this way, the negative pressure generated by the vacuum pump is transferred to the pick-up means 14 without losses of load.

To ensure greater tightness of the vacuum and improve sliding between the lower face 18 of the shoes 13 and the sliding surface 16, one of these two surfaces is preferably produced on a layer made of plastic material

In the variant illustrated, the sliding surface is produced at a layer 21 of plastic material applied to the upper face 19 of the vacuum channel 15.

Plastic materials such as PTFE (Teflon®) or equivalent are particularly suitable for application.

According to the invention the shoes are provided with sealing means that prevent the passage of air between two adjacent shoes.

The sealing means comprise contact surfaces that mutually adhere at least in part when two shoes are set next to each other.

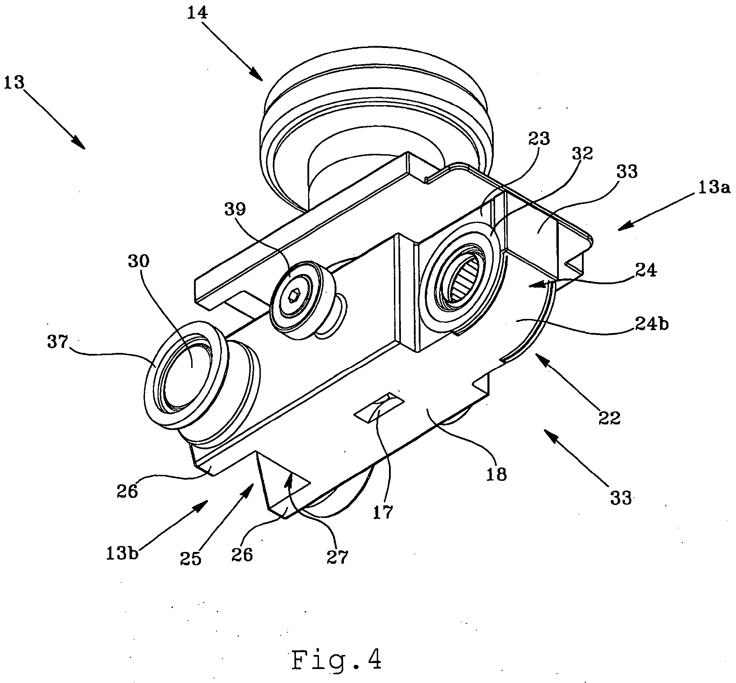

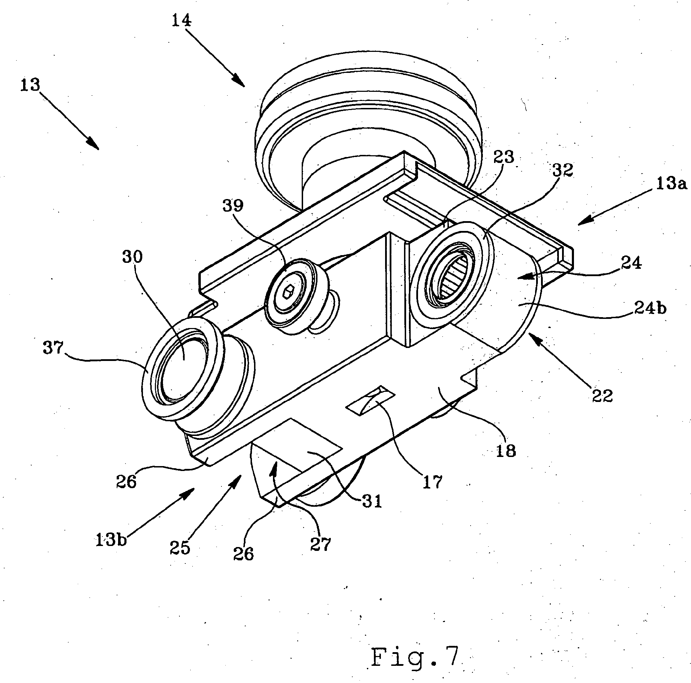

More in detail, each shoe 13 is provided with a first contact surface 24 on a first side 13a and with a second contact surface 27 on a second side 13b (Figs. 4, 7). Both the contact surfaces 24, 27 have respectively at least one curved section 24b, 27b.

When the two shoes 13 are set next to each other between said curved sections 24b, 27b, they mutually adhere.

In the variant illustrated, the curved sections 24b, 27b of the first and of the second contact surface comprise a circular arc. Preferably said curved sections 24b, 27b have radiuses of the same value of length. In this way, when two shoes 13 are adjacent to each other, said curved sections are in contact on the whole of their surface.

To ensure the tightness, said curved sections 24b, 27b are in contact along an arc with an angle α preferably comprised between 5° and 180°. More preferably, said arc with an angle α is preferably comprised between 30° and 170°.

According to the invention, said curved sections 24b, 27b lie on a circumference tangent to the lower face 18 of the shoe 13.

More in detail, one of said curved sections has a profile tangent to the lower surface 18 of the shoe 13.

In a preferred variant of the invention, the curved section 24b of the first contact surface 24 is convex and the curved section 27b of the second contact surface 27 is concave.

In this variant the convex section 24b has a profile tangent to the lower surface 18 of the shoe 13.

In an alternative variant, the contact surfaces 24, 27 of a shoe 13 could have curved sections 24b, 27b, both concave or both convex.

In this variant the conveyor chain 12 could comprise shoes 13 that differ from each other, and specifically shoes with both curved sections 24b, 27b concave alternated with shoes 13 with both curved sections 24b, 27b convex.

According to a preferred variant, at the first side 13a thereof, each shoe 13 is provided with at least one projecting portion 22. This projecting portion 22 is defined by two flat and parallel lateral faces 23 on which the contact surface 24 is produced.

Instead, at the opposite side the shoe 13 has at least one seat 25 comprised between two lateral flanges 26 and a bottom wall adapted to house the projecting portion 22 of an adjacent shoe 13. On said bottom wall there is produced the contact surface 27.

In the central portion 22 and in the lateral flanges 26 there are produced respectively holes to house a through pin 30 that enables connection of the various shoes to form the conveyor chain 12.

The curved sections 24b, 27b, respectively of the first and of the second contact surface 24, 27, enable the shoes 13 to rotate in relation to one another about the axis of the pins 30. In this way the conveyor chain 12 can follow curved paths, for example around a pulley 45 that draws said chain along the circulation path 11.

For this purpose, between adjacent shoes 13, at the lower surface S of the conveyor chain 12, there is a separating section Z. This separating section Z permits adjacent shoes to rotate without interfering with each other, at the lower surface thereof. The extension of the section Z is therefore a function of the maximum angle of relative rotation desired between two shoes.

According to a preferred variant, sealing gaskets 32 are interposed between the projecting portion 22 and the lateral flanges 26: Advantageously, said sealing gaskets 32 extend, in the lower part, up to the lower surface 18 of the shoes. In this way, said gaskets 32 delimit the separating section Z at the lateral ends thereof, preventing the passage of air from outside.

Instead, at the top, the separating section Z is delimited by the contact surfaces 24, 27 of the shoes.

In practice, the separating section Z comprises a closed volume that is placed in communication only with the vacuum channel 15, communication that occurs when the separating section Z is at one of the openings 20. However, due to the sealing gaskets 32 and to the contact surfaces 24, 27, this communication does not permit the vacuum apparatus to draw in air from outside.

In one embodiment of the invention, shown in Figs. 2 to 4, the convex section 24b of the projecting portion 22 has an extension comprised between 80° and 90°. This convex section 24b is also preferably connected in the lower part with the lower face 18 of the shoe 13.

The concave section 27b has a slightly smaller angular extension with respect to the angular extension of the convex section 24b. Said concave section 27b has an extension comprised between 65°and 80° Therefore, the concave section 27b extends toward the lower surface 18 of the shoe 13 moving toward it tangentially. The area not in contact between the contact surfaces 24, 27 is occupied by. the separating section Z.

To limit friction between the contact areas of two adjacent shoes 13, at least one end portion of the shoe 13, on which the contact surfaces 24, 27 lie, can be made of a different material from the rest of the body of the shoe.

Said portion can be made of a plastic material or, alternatively, of a metal with good sliding properties.

Plastic materials such as PTFE (Teflon®), Turcite® or similar are particularly suitable.

Alternatively, again in order to reduce friction during rotation of two adjacent shoes, the body of the shoe 13 can be made of sintered metal, preferably self-lubricating.

To further improve the tightness of the vacuum, between the first contact surface 24 and the second contact surface 27 of two adjacent shoes, there can be interposed a layer 33 made of deformable material, preferably rubber or more specifically polychloroprene (Neoprene or the like).

More in detail, said layer 33 is placed at flat sections 24a and 27a, respectively of the first contact surface 24 and of the second contact surface 27.

Said layer 33 acts as a further sealing element to maintain the vacuum between two adjacent shoes.

Due to its elasticity, said layer 33 can be installed already compressed between the two surfaces 24a and 27a so as to adhere perfectly thereto.

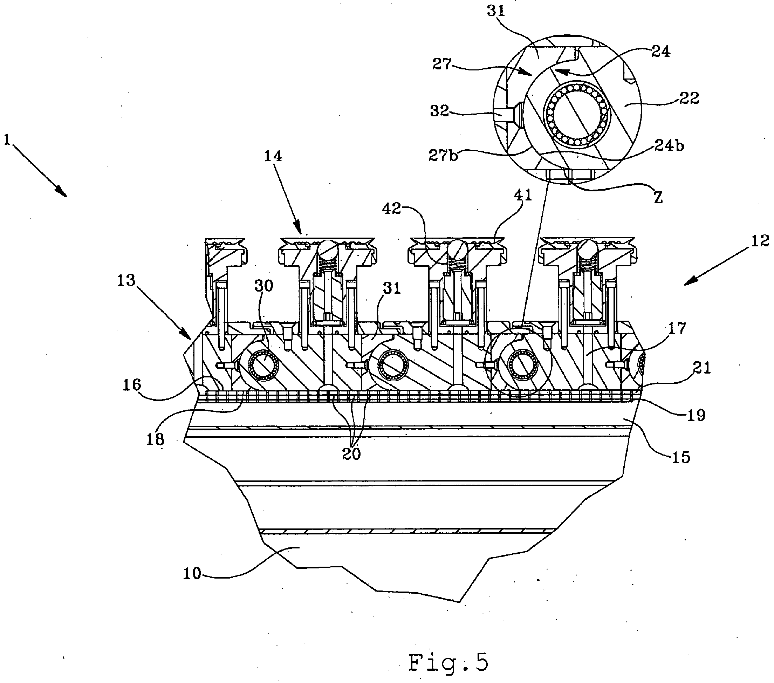

According to another variant of the invention, shown in Figs. 5 to 7, the convex section 24b has a greater extension and occupies the majority of the contact surface 24. In this variant, the convex section forms a substantially semi-circular arc, tangent in the lower part to the lower face 18 of the shoe. The convex section 24b has, for example, an extension comprised between 170° and 180°.

In a complementary manner, the concave section 27b of the second contact surface 27 also forms an arc, having the same center as the convex section 24b, with extension comprised, for example, between 150°and 170°.

Also in this case, the area not in contact between the contact surfaces 24, 27 is occupied by the separating section Z.

In this variant, the concave section 27b is preferably produced on an insert 31. This insert is separable from the rest of the shoe 13. The insert is preferably made of a plastic material .(such as PTFE, Turcite® or similar), or of a self-lubricating metal.

To ensure perfect adhesion between the sliding surface 16 of the vacuum channel 15 and the lower faces 18 of the shoes, the vacuum channel is mounted sliding crosswise with respect to the support 10 (in the direction Z). Elastic means 35 act on said vacuum channel 15 to maintain it pressed, with a certain degree of preload, against the lower surface of the conveyor chain 12.

In this way, it is possible to eliminate any play caused by gradual wear of the layer 21 made of plastic material on which the sliding surface 16 is produced.

Replacement of said layer 21 due to wear, which also depends on its initial thickness, can be carried out after relatively long intervals of time, and consequently does not influence the reliability of the device.

Moreover, according to the invention the shoes 12 of the conveyor chain can be guided on the support 10 at least in the active section T.

For this purpose, each shoe 12 comprises at least one pair of guide wheels 37, preferably mounted on the same pins 30 that connect the various shoes, which rotate resting on the lower guides 38, integral with the support 10.

Preferably, at least one of said guide wheels 36 has the rolling surface with a curved profile adapted to cooperate with a corresponding profile of one of the guides 38, to maintain the shoe correctly aligned with the support 10.

Preferably, each shoe 13 is also provided with at least one pair of preload wheels 39, projecting laterally from the body of the shoe and which rotate on a pair of upper abutments 40, also connected to the support 10.

More in detail, said upper abutments 40 are connected in a movable way to the support to take up any play and ensure that, during translation in the active section T, the guide wheels 37 are in contact with the guides 38 and the preload wheels 39 are in contact with said abutments 40.

By adjusting said distance it is also possible to vary the preload force that is generated on the respective guides/abutments when all the wheels are contact therewith.

In this way the shoes 13 are stably constrained to the support 10 without being able to move in the transverse directions Y and Z.

This enables precision machining operations to be performed when the panel is gripped in the pick-up means 14, both when it is stationary and when it is moved along the active section T in the direction X.

Due to the present invention, the blocking and moving device enables all the suction force generated by the vacuum pumps to be transferred to the pick-up means 14 without substantial losses of load.

Typically, said pick-up means 14 can comprise at least one suction cup 41 provided with a valve 42 (of known type) that acts on the suction channel 17 and that is only operated when a workpiece P is pressed thereagainst.

With this system it is therefore possible to maintain a high negative pressure in the whole of the suction circuit, maximizing the sealing force of the pick-up means 14.

With reference to Fig. 11, there is illustrated a machine tool 100, for machining substantially flat elements, or with at least one flat surface, such as panels or the like, in which there is used a device for blocking and moving the workpiece according to the invention.

Preferably said machine tool comprises at least one pair of devices 1 for blocking and moving a workpiece, arranged side by side so as to be able to stably support the panel P or the workpiece to be machined.

Typically, the machine tool 100 comprises a machining area 101, interposed between a loading area and an unloading area of the workpiece (not illustrated in the figure), in which the panel P advances to undergo the machining operations required.

Advance of the panel P is performed by means of the conveyor chain 12 moved by motor means (not illustrated) by means of at least one pulley 45 on which it is partly wound.

Advantageously, said blocking and moving devices 1 are movable on guides 108 in the direction Y, so as to be able to be moved toward and away from one another as a function of the dimension of the panel P to be machined.

According to a preferred variant, the machine comprises at least one portal 102, movable on guides 103 along a direction X parallel to that of advance of the panel P in the machine.

On said portal there is mounted a slide 104 that supports a machining head 105 movable at least along the axes Y and Z.

Further tools 106, such as circular saws or the like, are on a base 107 of the machine 100 with the possibility of movements at least along the axes Y and Z of the machine.

With the present machine a panel can be loaded automatically onto the blocking and moving device that conveys it through the machining area to undergo all the machining operations required, both with the workpiece stationary and with the workpiece moving.

At the end the panel can be picked up and removed automatically by the unloading system.

Due to the blocking and moving device of the invention, it is possible to produce a machine that performs a high number of different machining operations on the panel. This is possible due to the fact that the pick-up means only engage a minimum portion of a surface (typically lower), leaving the lateral edges and the upper face completely free for the action of tools.

The machine is therefore very flexible, but at the same time has a much higher production capacity with respect to machines that operate with the workpiece stationary, such as pantographs or the like.

## Claims

1. A device for blocking and moving a workpiece (P) in a machine tool, comprising:
- a conveyor chain (12), which includes a plurality of shoes (13) connected to one another, wherein at least one of said shoes (13) is provided with at least one suction channel (17) that passes through the body of the shoe (13) and flows out from a lower face (18);
- a support (10) that defines a circulation path (11) for said conveyor chain (12);
- a vacuum channel (15) with a sliding surface (16), on which said shoes (13) slide;
- vacuum pick-up means (14) in communication with said vacuum channel by means of said suction channel;
wherein on said sliding surface (16) there being produced at least one opening (19) to place said vacuum channel (15) in communication with the suction channel (17), and wherein said shoes (13) being provided with sealing means adapted to prevent suction of air between two adjacent shoes,
said sealing means comprising a first contact surface (24) with at least one curved section (24b) on a first side (13a) and a second contact surface (27) with a curved section (27b) on a second side (13b), the curved sections of two adjacent shoes being one convex and the other concave so as to mutually adhere when the shoes (13) are set next to each other,
**characterized in that** said curved sections (24b, 27b) lie on a circumference tangent to the lower surface (18) of the shoes,
said lower surface (18) resting on the sliding surface (16) when the shoes (13) slide on it.

2. The device according to claim 1, **characterized in that** said curved sections (24b, 27b) are in contact along an arc with an angle comprised between 5° and 180°.

3. The device according to any one of claims 1 or 2, **characterized in that** said shoes (13) are provided on the first side (13a) with at least one projecting portion (22) on which there is produced the first contact surface (24) and on the second side (13b) with at least one seat (25), comprised between lateral flanges (26) and a bottom wall, adapted to house said projecting portion (22), wherein on the bottom wall there is produced the second contact surface (27).

4. The device according to claim 3, **characterized in that** between the projecting portion (22) and the lateral walls (26) there is interposed a sealing gasket (32), said sealing gasket (32) extending up to the lower surface (18) of the shoes.

5. The device according to any one of the preceding claims, **characterized in that** at least the convex section (24b) or the concave section (27b) is produced on an insert (31), separate and made integral with the shoe (13).

6. The device according to claim 5, **characterized in that** said insert is made of a plastic material.

7. The device according to any one of the preceding claims, **characterized in that** between said contact surfaces (24, 27) there is interposed a layer (33) made of flexible material to ensure the tightness of the vacuum.

8. The device according to any one of the preceding claims, **characterized in that** the upper face (19) of the vacuum channel (15) is covered with a layer (21) made of plastic material, to improve the tightness of the vacuum and sliding between the lower face (18) of the shoes (13) and the sliding surface (16).

9. The device according to any one of the preceding claims, **characterized in that** said vacuum channel (15) is mounted sliding crosswise with respect to the support (10) at least in one direction (Z) and is subject to the action of elastic means (35) that maintain it pressed, with a certain degree of preload, against the lower faces (18) of the shoes (13).

10. The device according to any one of the preceding claims, **characterized in that** said shoes (13) comprise at least one pair of guide wheels (36) adapted to rotate resting on lower guides (38), integral with the support (10).

11. The device according to any one of the preceding claims, **characterized in that** said shoes (13) comprise at least one pair of preload wheels (39) projecting laterally from the body of the shoe .(13), adapted to rotate resting on a pair of upper abutments (40) connected in a movable way to the support (10).

12. A machine tool (100) provided with at least one device for blocking and moving a workpiece according to any one of the preceding claims.

## Patentansprüche

1. Eine Vorrichtung, um ein Werkstück (P) in einer Werkzeugmaschine zu blockieren und zu bewegen, umfassend:
- eine Förderkette (12), die eine Mehrzahl von miteinander verbundenen Kettenschuhen (13) enthält, wobei mindestens einer der besagten Schuhe (13) mit mindestens einem Saugkanal (17) versehen ist, der durch den Körper des Schuhs (13) verläuft und aus einer unteren Fläche (18) ausfließt;
- eine Auflagefläche (10), die einen Umlaufweg (11) für besagte Förderkette (12) definiert;
- einen Vakuumkanal (15) mit einer Gleitfläche (16), auf der die besagten Schuhe (13) gleiten;
- Vakuum-Aufnahme-Vorrichtungen (14), die mit dem besagten Vakuumkanal mittels des besagten Saugkanals in Verbindung stehen;
wobei auf der besagten Gleitfläche (16) mindestens eine Öffnung (19) vorgesehen ist, um den besagten Vakuumkanal (15) mit dem besagten Saugkanal (17) in Verbindung zu setzen, und wobei besagte Schuhe (13) mit Versiegelungsvorrichtungen versehen sind, die dazu geeignet sind, das Aufsaugen der Luft zwischen zwei nebeneinanderliegenden Schuhen zu verhindern, wobei die besagten Versiegelungsvorrichtungen eine erste Kontaktoberfläche (24) mit mindestens einem kurvenförmigen Abschnitt (24b) auf einer ersten Seite (13a) und eine zweite Kontaktoberfläche (27) mit einem kurvenförmigen Abschnitt (27b) auf einer zweiten Seite (13b) umfassen, wobei von den kurvenförmigen Abschnitten der zwei nebeneinanderliegenden Schuhe der eine konvex und der andere konkav ist, sodass sie gegenseitig zusammenhaften, wenn die Schuhe (13) nebeneinander gestellt werden, **dadurch gekennzeichnet, dass** die besagten kurvenförmigen Abschnitte (24b, 27b) auf einem die untere Fläche (18) der Schuhe (13) berührenden Kreisumfang liegen, wobei die besagte untere Fläche (18) auf der Gleitfläche (16) liegt, wenn die Schuhe (13) auf ihr gleiten.

2. Die Vorrichtung gemäß Anspruch 1, **dadurch gekennzeichnet, dass** die besagten kurvenförmigen Abschnitte (24b, 27b) längs eines Bogens mit einem Winkel, der zwischen 5° und 180° liegt, in Berührung sind.

3. Die Vorrichtung gemäß einem jeglichen der Ansprüche 1 oder 2, **dadurch gekennzeichnet, dass** die besagten Schuhe (13) auf der ersten Seite (13a) mit mindestens einem hervorstehenden Teil (22) versehen sind, auf dem die erste Kontaktoberfläche (24) bewirkt wird, und auf der zweiten Seite (13b) mit mindestens einem Sitz (25) versehen sind, eingeschlossen zwischen seitlichen Flanschen (26) und einer Unterwand, dazu geeignet, den besagten hervorstehenden Teil (22) aufzunehmen, wobei auf der Unterwand die zweite Kontaktoberfläche (27) bewirkt wird.

4. Die Vorrichtung gemäß Anspruch 3, **dadurch gekennzeichnet, dass** zwischen dem hervorstehenden Teil (22) und den seitlichen Wänden (26) eine Versiegelungsdichtung (32) eingefügt ist, wobei sich die besagte Versiegelungsdichtung (32) bis zur unteren Fläche (18) der Schuhe erstreckt.

5. Die Vorrichtung gemäß einem jeglichen der vorherigen Ansprüche, **dadurch gekennzeichnet, dass** mindestens der konvexe Abschnitt (24b) oder der konkave Abschnitt (27b) auf einem Einsatz (31) bewirkt ist, der getrennt und mit dem Schuh (13) fest verbunden ist.

6. Die Vorrichtung gemäß Anspruch 5, **dadurch gekennzeichnet, dass** der besagte Einsatz aus einem Plastikmaterial gefertigt ist.

7. Die Vorrichtung gemäß einem jeglichen der vorherigen Ansprüche, **dadurch gekennzeichnet, dass** zwischen den besagten Kontaktoberflächen (24, 27) eine Schicht (33) aus einem flexiblen Material eingefügt ist, um die Dichte des Vakuums zu garantieren.

8. Die Vorrichtung gemäß einem jeglichen der vorherigen Ansprüche, **dadurch gekennzeichnet, dass** die obere Fläche (19) des Vakuumkanals (15) mit einer Schicht (21) aus Plastikmaterial bedeckt ist, um die Dichte des Vakuums und das Gleiten zwischen der unteren Fläche (18) der Schuhe (13) und der Gleitfläche (16) zu verbessern.

9. Die Vorrichtung gemäß einem jeglichen der vorherigen Ansprüche, **dadurch gekennzeichnet, dass** besagter Vakuumkanal (15) so montiert ist, dass er mindestens in einer Richtung (Z) quer zur Auflagefläche (10) gleitet und der Wirkung von elastischen Vorrichtungen (35) unterliegt, die ihn mit einem gewissen Grad Vorspannkraft gegen die untere Fläche (18) der Schuhe (13) gedrückt halten.

10. Die Vorrichtung gemäß einem jeglichen der vorherigen Ansprüche, **dadurch gekennzeichnet, dass** die besagten Schuhe (13) mindestens ein Paar Führungsräder (36) umfassen, die dazu geeignet sind, zu drehen, indem sie auf den unteren Führungen (38) ruhen, die mit der Auflagefläche (10) einen Teil bilden.

11. Die Vorrichtung gemäß einem jeglichen der vorherigen Ansprüche, **dadurch gekennzeichnet, dass** die besagten Schuhe (13) mindestens ein Paar Vorspannkrafträder (39) umfassen, die seitlich vom Körper des Schuhs (13) hervorstehen und dazu geeignet sind, zu drehen, indem sie auf einem Paar oberer Widerlager (40) ruhen, die auf eine bewegliche Weise mit der Auflagefläche (10) verbunden sind.

12. Eine Werkzeugmaschine (100), versehen mit mindestens einer Vorrichtung, um ein Werkstück zu blockieren und zu bewegen, gemäß einem jeglichen der vorherigen Ansprüche.

## Revendications

1. Dispositif pour bloquer et déplacer une pièce (P) dans une machine-outil, comprennant :
- une chaîne de transport (12), qui inclut une multitude de patins (13) raccordés les uns aux autres (13) est dotée d'au moins un canal d'aspiration (17) qui passe à travers le corps du support (13) et sort par une face inférieure (18) ;
- un support (10) qui définit un parcours de circulation (11) pour ladite chaîne de transport (12) ;
- un canal de vide (15) avec une surface coulissante (16), sur laquelle ledit patin (13) coulisse ;
- des moyens de prélèvement par aspiration (14) en communication avec ledit canal de vide au moyen dudit canal d'aspiration ;
où sur ladite surface coulissante (16) est produite au moins une ouverture (19) pour mettre ledit canal de vide (15) en communication avec le canal d'aspiration (17), et où ledit patin (13) est doté de moyens d'étanchéité adaptés pour éviter l'aspiration de l'air entre les patins adjacents, lesdits moyens d'étanchéité compreneant une première surface de contact (24) avec au moins une section courbe (24b) sur un premier côté (13a) et une seconde surface de contact (27) avec une section courbe (27b) sur un second côté (13b), les sections courbes de deux patins adjacents étant l'une convexe et l'autre concave de manière à adhérer mutuellement lorsque les patins (13) sont placés l'un à côté de l'autre, **caractérisé par le fait que** lesdites sectons courbes (24b, 27b) reposent sur une circonférence tangente à la surface inférieure (18) des patins (13), ladite suface inférieure (18) reposant sur la surface coulissante (16) lorsque les patins (13) coulissent dessus.

2. Dispositif selon la revendication 1, **caractérisé par le fait que** lesdites sections courbes (24b, 27b) sont en contact le long d'un arc avec un angle compris entre 5° et 180°.

3. Dispositif selon l'une des revendications 1 ou 2, **caractérisé par le fait que** lesdits patins (13) sont doté sur le premier côté (13a) avec au moins une portion en saillie (22) sur laquelle est produite la première surface de contact (24) et sur le second côté (13b) avec au moins un siège (25), compris entre des brides latérales (26) et une paroi de fond, adaptées pour loger ladite portion en saillie (22), où la seconde surface de contact (27) est produite sur la paroi de fond.

4. Dispositif selon la revendication 3, **caractérisé par le fait qu'**entre la portion en saillie (22) et les parois latérales (26) est interposé un joint d'étanchéité (32), ledit joint d'étanchaité (32) s'étendant jusqu'à la surface inférieure (18) des patins.

5. Dispositif selon l'une des revendications précédentes, **caractérisé par le fait qu'**au moins la section convexe (24b) ou la section concave (27b) est produite sur un insert (31), séparé et rendu partie intégrante du patin (13).

6. Dispositif selon la revendication 5, **caractérisé par le fait que** ledit insert est réalisé en matériau plastique.

7. Dispositif selon l'une des revendications précédentes, **caractérisé par le fait qu'**entre lesdites surfaces de contact (24, 27) est interposé une couche (33) réalisée en matériau flexible pour assurer l'étanchéité du vide.

8. Dispositif selon l'une des revendications précédentes, **caractérisé par le fait que** la face supérieure (19) sur le canal de vide (15) est couverte par une couche (21) réalisée en matériau plastique, pour améliorer l'étanchéité du vide et coulissant entre la face inférieure (18) des patins (13) et la surface de coulissement (16).

9. Dispositif selon l'une des revendications précédentes, **caractérisé par le fait que** ledit canal de vide (15) est monté par coulissement transversal par rapport au support (10) au moins dans une direction (Z) et qu'il est sujet à l'action de moyens élastiques (35) qui le maintient appuyé, avec un certain degré de précharge, contre les faces inférieures (18) des patins (13).

10. Dispositif selon l'une des revendications précédentes, **caractérisé par le fait que** lesdits patins (13) comprennent au moins une paire de roues de guidage (36) adaptées pour pivoter en reposant sur des guides inférieurs (38), intégrés au support (10).

11. Dispositif selon l'une des revendications précédentes, **caractérisé par le fait que** lesdits patins (13) comprennent au moins une parie de roues préchargées (39) en saillie latérale depuis le corps du patin (13), adaptées pour pivoter en reposant sur une paire de butées supérieures (40) raccordées de manière amovible au support (10).

12. Machine-outil (100) équipée d'au moins un dispositif de blocage et déplacement d'une pièce selon l'une des revendications précédentes.
